# EUROPEAN PATENT APPLICATION

(11) **EP 4 650 035 A1**
(43) Date of publication of application: **19.11.2025**
(21) Application number: 24176126.1
(22) Date of filing: 15.05.2024
(51) Int. Cl.: B01D 53/26

(54) **METHOD AND APPARATUS FOR DRYING A GAS**

(71) Applicant: Ateliers Francois, 4000 Liege (BE)
(72) Inventor: KITCHENER, Anthony, Melbourne (AU); PRIOR, Jack, Spotswood (AU); BOON-FALLEUR, Grégoire, Liège (BE); ROLIN JACQUEMYNS, Didier, Overijse (BE)
(74) Representative: Icosa Europe

(57) **Abstract**

Method for drying a gas by feeding the gas into a series of at least two chambers (10, 20) containing each a regenerable adsorbent for drying said gas and meanwhile to feed a part of the dried gas into a series of at least two other chambers (30, 40) while those other chambers are vented, in order to regenerate the adsorbent contained into these two other chambers. Meanwhile, a blower (70) feeds air from an air intake (75) into at least one of the at least two other chambers (30, 40) in order to improve the regeneration of their adsorbent. An apparatus (1) that is adapted to implement the method, is also disclosed.

## Description

### Field of the invention

The invention relates to an apparatus and a method for drying a gas. In some examples, the invention relates more particularly to an apparatus and a method for drying a gas at a high pressure and at a high flow rate, such as for example a pressure greater than 5 bar and a flow rate greater than 1 m³/min and up to 100 m³/min.

### Description of prior art

Gas compressors of many types are known in the art. It is also known that compressed gas, particularly compressed air, has a relatively high moisture content when leaving the compressor and that such moisture content should be removed or at least reduced before delivery of the compressed gas to a user. Several methods have been proposed for drying a compressed gas.

A known method consists in adsorbing the water vapour of the compressed gas on a desiccant. In such desiccant dryers, the desiccant must however be regenerated or replaced when it is saturated with moisture. Two conventional methods for regenerating a saturated desiccant are the Thermal Swing Adsorption (TSA) method and the Pressure Swing Adsorption (PSA) method. With the TSA method, the desiccant is regenerated by heating it up to high temperatures, typically over 120°C, which causes desorption of the previously adsorbed moisture. After this step, the desiccant must be cooled down, preferably with dry cooling air, in order to be able to efficiently adsorb the water vapour again from the humid compressed gas.

Such a method is for example known from American patent US6221130. Here, the desiccant to be regenerated is placed in the gas flow of an interstage of a multistage compressor and the heat of this interstage gas is used to desorb the moisture previously adsorbed from the compressor output.

Such method has the disadvantage that it uses relatively humid air for the regeneration process, which impairs on the efficiency of this process.

The efficiency of this process furthermore depends on the temperature of the interstage compressed gas, which parameter can generally not be freely chosen because it depends on the compression process. Compared to the PSA method, which will be detailed hereafter, the TSA method is also much slower because of the time needed to heat up and then cool down the desiccant at each regeneration cycle. As a further negative consequence of this, TSA vessels which hold the desiccant must be large and when there are large vessels that must withstand high pressure they need thick walls and are very expensive to manufacture.

A compressor using a PSA dryer is known from European patent EP3108953. The PSA method does not use changes in temperature but rather changes in pressure in order to release the adsorbed moisture. Typically, a desiccant adsorbs the moisture at an elevated pressure, and the process then swings to a lower pressure in order to desorb the adsorbed moisture from the desiccant. Adsorption and desorption may operate at near-ambient temperature and do neither need external heating nor cooling, which is an advantage over the TSA process. Though such a PSA dryer works well, there is a need to further improve its drying capacity and/or efficiency.

### Summary of the invention

It is an object of the invention to provide a method and an apparatus for drying a gas which addresses the problems of the prior art methods and apparatus. According to some examples, it is more particularly an object of the invention to provide a method and an apparatus for drying gas at a high pressure and at a high flow rate, such as for example a pressure greater than 5 bar and a flow rate greater than 1 m³/min and up to 100 m³/min.

The invention is defined by the independent claims. The dependent claims define advantageous embodiments.

According to the invention, there is provided a method for drying a gas, comprising the following steps:
a) drying the gas during a first period of time by feeding it from a gas input into a first chamber comprising a first regenerable adsorbent and into a second chamber comprising a second regenerable adsorbent, the first chamber and the second chamber being connected in series, the second chamber delivering a dried gas at a gas output for a user;
b) regenerating a third regenerable adsorbent contained in a third chamber and a fourth regenerable adsorbent contained in a fourth chamber while step a) is being performed, the third chamber and the fourth chamber being connected in series, by feeding said third chamber through a bidirectional transfer valve with at least a part of the dried gas output by the second chamber and by venting the fourth chamber through a first venting valve connected downstream of the fourth chamber;
c) switching ON a blower to blow air taken from an air intake, through a first blower valve, into an input upstream of the fourth chamber, while step b) is being performed, optionally by further opening a second venting valve connected downstream of the fourth chamber;
d) switching OFF the blower and closing the first blower valve, and meanwhile continuing to perform steps a) and b) during a first cooling period of time included into the first period of time;
e) closing the first venting valve, closing the first blower valve (or keeping it closed), and closing the second venting valve if it is present (or keeping it closed), during a first pressurizing period of time included into the first period of time and meanwhile continuing to perform step a).

This method is different from the refrigeration method and from the pure TSA method and hence it doesn't show the aforementioned disadvantages of these methods. The method according to the invention does use the PSA method in a new and specific way, namely by blowing air taken from an air intake into at least one of those chambers that are undergoing regeneration of their adsorbent. A blower used for this step will partially heat up the air introduced into the chambers that are undergoing regeneration of their adsorbent, which contributes to improving the regeneration of the adsorbent of those chambers, which in turn will improve their drying capacity when they will turn into drying mode for drying the gas from the gas input.

In some examples, the blower is blowing air into a second gas conduit that connects an output of the third chamber with an input of the fourth chamber. This has been found to be globally more efficient than blowing the air into both chambers undergoing regeneration of their adsorbent.

In some examples, the blower is blowing air into the second gas conduit, said air having been pre-heated by a first heat exchanger arranged into the second gas conduit. This has been found to be globally more efficient than without preheating the air.

In some examples, the method further comprises the following steps, after having performed step e):
f) drying the gas during a second period of time by feeding it into the fourth chamber, the third chamber delivering a dried gas at the gas output for the user;
g) regenerating the first regenerable adsorbent and the second regenerable adsorbent while step f) is being performed, by feeding the second chamber through the bidirectional transfer valve with at least a part of the dried gas output by the third chamber and by venting the first chamber through a third venting valve connected downstream of the first chamber;
h) switching ON the blower to blow air from the air intake, through a second blower valve, into an input upstream of the first chamber, while step g) is being performed, optionally by opening a fourth venting valve connected downstream of the first chamber;
i) switching OFF the blower and closing the second blower valve, and meanwhile continuing to perform steps f) and g) during a second cooling period of time included into the second period of time;
j) closing the third venting valve, closing the second blower valve, and closing the fourth venting valve if it is present, during a second pressurizing period of time included into the second period of time and meanwhile continuing to perform step f).

Swapping the functions of the four chambers and blowing air into those chambers that are undergoing regeneration of their adsorbent during these further phases of operation presents the same advantages as described hereinabove.

In some examples, the set of steps a) to j) is repeated a plurality of times, starting over with step a) when step j) is finished.

In some examples, the gas to be dried is compressed air, such as compressed ambient air for example.

The invention also concerns an apparatus that is adapted to implement these methods.

### Short description of the drawings

These and further aspects of the invention will be explained in greater detail by way of examples and with reference to the accompanying drawings in which:
- Fig.1: schematically shows an exemplary apparatus according to the invention;
- Fig.2: schematically shows an exemplary apparatus according to a preferred embodiment of the invention.
- Fig.3: shows the apparatus of Fig.1 during a first phase of operation;
- Fig.4: shows the apparatus of Fig.1 during a second phase of operation;
- Fig.5: shows the apparatus of Fig.1 during a third phase of operation;
- Fig.6: shows the apparatus of Fig.1 during a fourth phase of operation;
- Fig.7: shows the apparatus of Fig.1 during a fifth phase of operation;
- Fig.8: shows the apparatus of Fig.1 during a sixth phase of operation;
- Fig.9: shows the apparatus of Fig.1 during a seventh phase of operation;
- Fig.10: shows the apparatus of Fig.1 during an eighth phase of operation;

The drawings of the figures are neither drawn to scale nor proportioned. Generally, similar or identical components are denoted by the same reference numerals in the figures.

### Detailed description of embodiments of the invention

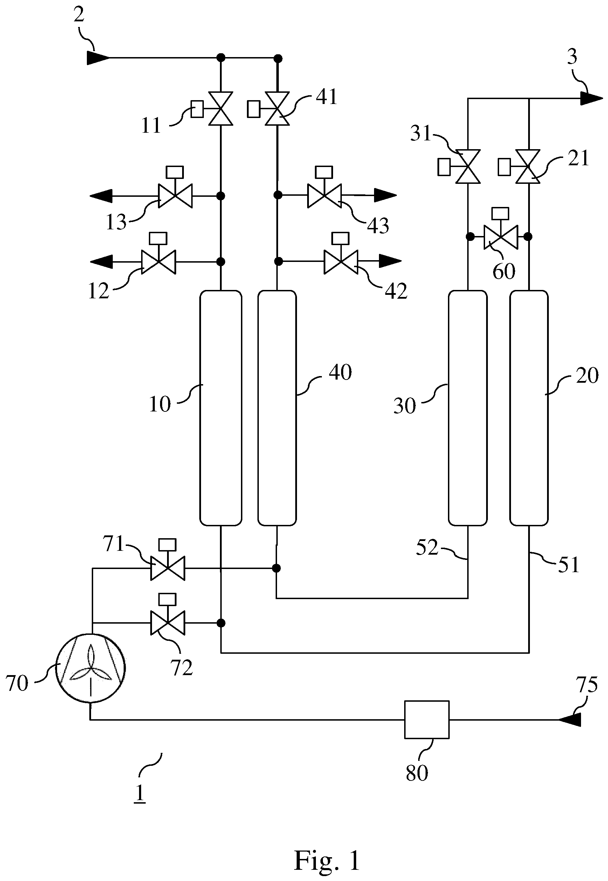

Fig.1 schematically shows an exemplary apparatus according to the invention. The apparatus comprises a first circuit including, fluidly connected in series, a gas input (2) to input the gas to be dried, a first main input valve (11), a first chamber (10) containing a first regenerable adsorbent, a first gas conduit (51), a second chamber (20) containing a second regenerable adsorbent, a first main output valve (21), and a gas output (3) to deliver the dried gas to a user.

The apparatus also comprises a second circuit comprising, fluidly connected in series, the said gas input (2) to input the gas to be dried, a second main input valve (41), a fourth chamber (40) containing a fourth regenerable adsorbent, a second gas conduit (52), a third chamber (30) containing a third regenerable adsorbent, a second main output valve (31), and the said gas output (3) to deliver the dried gas to the user.

The regenerable adsorbents contained in the four chambers are those materials which are capable of adsorbing and desorbing moisture from a gas, such as zeolites or activated alumina or silica gels for example.

The apparatus also comprises a bidirectional transfer valve (60) connected on its one side between the second main output valve (31) and the third chamber (30), and on its opposite side between the first main output valve (21) and the second chamber (20), thus allowing the gas to pass from the second chamber to the third chamber or vice versa, as will be detailed hereafter when describing the drying method. The bidirectional transfer valve (60) may for example be a simple aperture, or an orifice introducing a pressure drop, or a bidirectional flow regulator.

The apparatus also comprises a first venting valve (42) connected on its one side between the second main input valve (41) and the fourth chamber (40) and left free or open on its opposite side, as well as a third venting valve (12) connected on its one side between the first main input valve (11) and the first chamber (10) and left free or open on its opposite side.

In some examples, the apparatus also comprises a second venting valve (43) connected on its one side between the second main input valve (41) and the fourth chamber (40) and left free or open on its opposite side, and a fourth venting valve (13) connected on its one side between the first main input valve (11) and the first chamber (10) and left free or open on its opposite side.

In some examples, the first venting valve (42) is the same as the third venting valve (12). In some examples, the second venting valve (43) is the same as the fourth venting valve (13). In some examples, the second venting valve (43) and the fourth venting valve (13) are adapted to allow for a larger gas flow than the first venting valve (42) and the third venting valve (12).

In some examples, the second venting valve (43) and the fourth venting valve (13) are absent from the apparatus, and the first venting valve (42) as well as the third venting valve (12) may be two-way valves or proportional valves allowing for controllable variable gas flows.

The said adsorbents, as well as the said valves, gas conduits and chambers are all known in the art and will therefore not be described further.

As shown on Fig.1, the apparatus also comprises a third circuit comprising an air intake (75) and a blower (70) that are fluidly connected in series, a first blower valve (71) connected between an output of the blower (70) and the second gas conduit (52), and a second blower valve (72) connected between the output of the blower (70) and the first gas conduit (51), in order to blow the air from the air intake into the fourth chamber (40) or into the first chamber (10), respectively.

In some examples, the air intake (75) is configured to take air from the ambient.

In some examples, the blower is a side-channel blower, such as for example a side-channel blower commercialized by the company ESAM under product names such as FLUXJET or MEDIOJET or UNIJET. With such blowers, a shell that encases a turbine forms the side channel, which surrounds the entire turbine, except for a short area between the inlet and outlet ports at a bottom of the casing, which are sealed off from each other. Air is forced from between the turbine blades outwards. The compressed air is then forced to the centre of the perimeter of the side channel, where it then, following the channel, is set in a spiral motion until it returns to the turbine. With each such motion, the air makes its way from the inlet towards the discharge.

In some examples, the blower is capable of increasing the pressure of air by 0.1 to 0.5 bar, preferably by 0.2 bar. In case the air at the air intake (75) is at 1 bar (absolute) for example, the blower will hence deliver air at 1.1 to 1.5 bar (absolute) at its output, preferably at 1.2 bar (absolute) at its output.

In some examples, the third circuit comprises an air filter (80). Preferably the air filter (80) is mounted upstream of the blower (70).

In some examples, the first main input valve (11), the second main input valve (41), the first main output valve (21), the second main output valve (31), the first venting valve (42), the third venting valve (12), the first blower valve (71), and the second blower valve (72) are one-way valves. In some examples, the second venting valve (43) and the fourth venting valve (13) are one-way valves.

The apparatus also comprises a control unit (not shown) configured to operate the first main input valve (11), the second main input valve (41), the first main output valve (21), the second main output valve (31), the first venting valve (42), the third venting valve (12), the first blower valve (71), the second blower valve (72), the blower (70), and optionally the second venting valve (43) and the fourth venting valve (13), and optionally the bidirectional transfer valve (60). The way the control unit operates these valves and the blower will become apparent hereafter when describing the drying method.

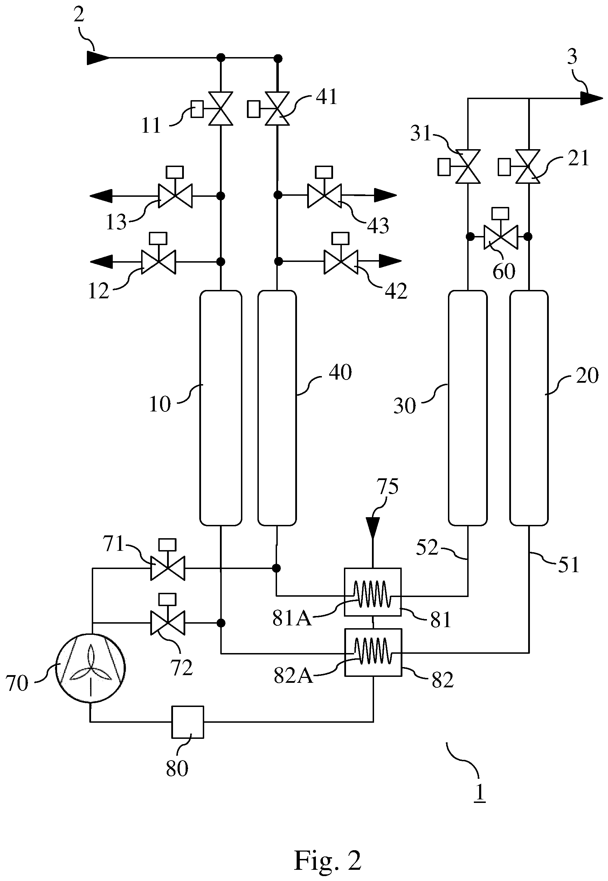

Fig.2 schematically shows an exemplary apparatus according to a preferred embodiment of the invention. In this embodiment, the apparatus is as shown in Fig.1 and it further comprises a first heat exchanger (81) having a first tubing (81A) arranged in series into the first gas conduit (51) and a second heat exchanger (82) having a second tubing (82A) arranged in series into the second gas conduit (52). The first tubing and the second tubing are both disposed into an airflow generated by the blower (70) when the blower is in operation. Hence, when the blower is switched ON, air coming from the air intake will be heated up by the gas flowing into the first and second gas conduits (51, 52) before being blown into the first or second gas conduits (51, 52). In some examples, the air intake (75) is configured to take air from the ambient.

A method for drying a gas according to the present disclosure will now be described.

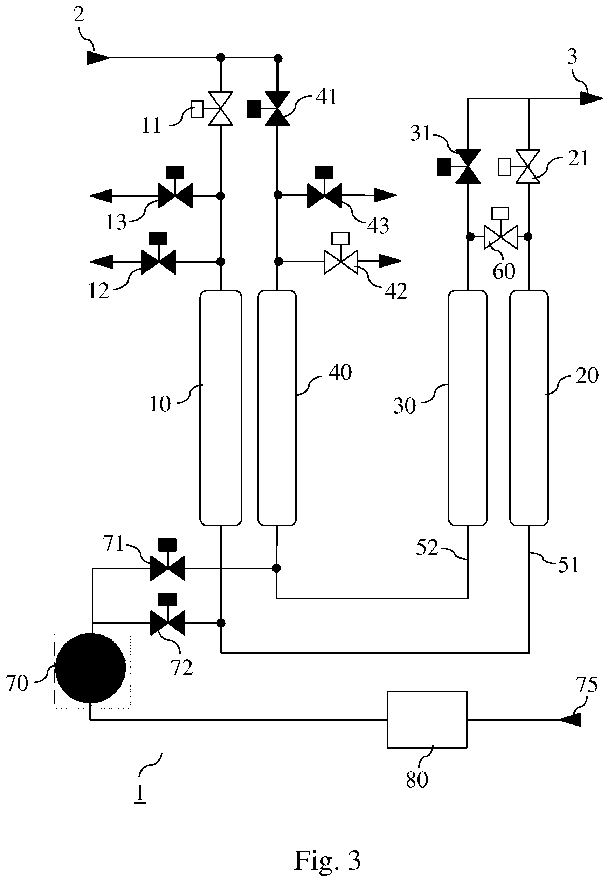

Such method comprises the following steps, as illustrated on Fig.3 to Fig. 6, wherein:
Fig.3 shows the apparatus of Fig.1 during a first phase of operation;

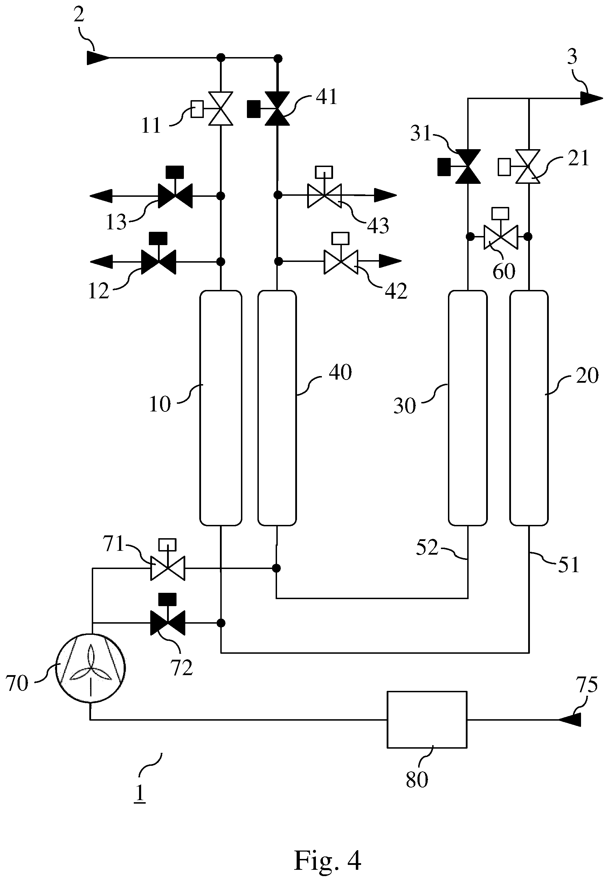

Fig.4 shows the apparatus of Fig.1 during a second phase of operation;

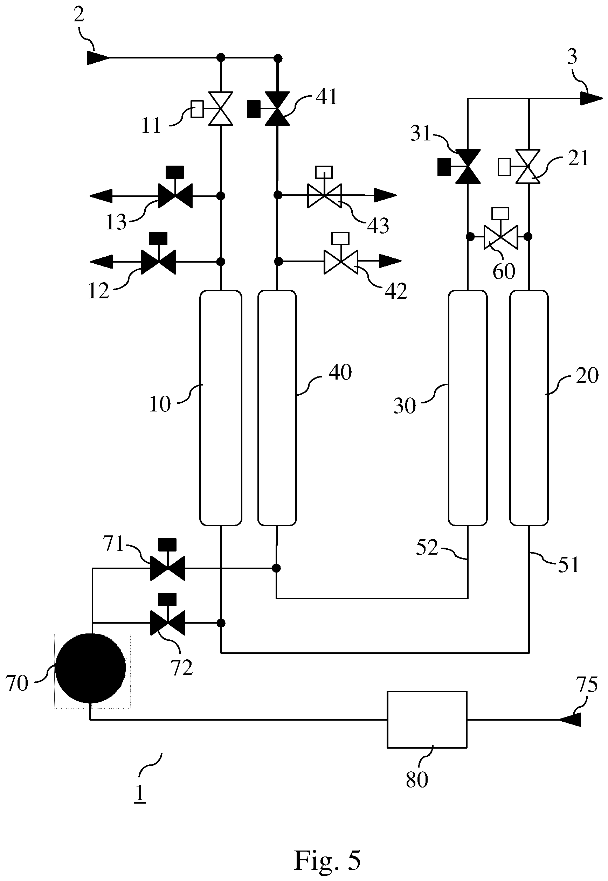

Fig.5 shows the apparatus of Fig.1 during a third phase of operation;

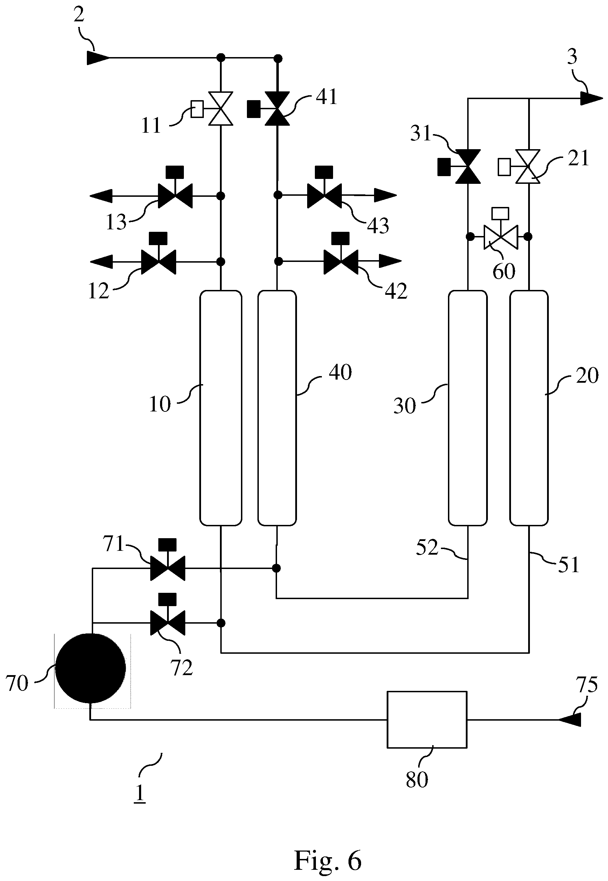

Fig.6 shows the apparatus of Fig.1 during a fourth phase of operation;

In these figures, a valve is closed if it is coloured in black, and a valve is at least partially open if it is coloured in white. In these figures, the blower (70) is switched OFF if it is coloured in black, and it is switched ON if it is coloured in white. A control unit is used and operated to open and close these valves and to switch the blower ON or OFF, as shown on these figures according to the operational phase.

### First phase of operation (Fig.3):

a) drying the gas during a first period of time by feeding it from a gas input (2) into a first chamber (10) comprising a first regenerable adsorbent and into a second chamber (20) comprising a second regenerable adsorbent, the first chamber and the second chamber being connected in series, the second chamber delivering a dried gas at a gas output (3) for a user; and
b) regenerating a third regenerable adsorbent contained in a third chamber (30) and a fourth regenerable adsorbent contained in a fourth chamber (40) while step a) is being performed, the third chamber and the fourth chamber being connected in series, by feeding said third chamber through a bidirectional transfer valve (60) with at least a part of the dried gas output by the second chamber and by venting the third chamber and the fourth chamber through a first venting valve (42) connected downstream of the fourth chamber.

During this first phase, the first main input valve (11), the first main output valve (21), the first venting valve (42) and the bidirectional transfer valve (60) are all at least partially opened, whereas the other valves (12, 13, 31, 41, 43) are all closed.

Meanwhile, the blower (70) is preferably switched OFF and the first blower valve (71) as well as the second blower valve (72) are preferably closed. During this first phase, which is basically known in the art, humid gas which is introduced at the gas input (2) will be dried by the regenerable adsorbents of the first and second chambers (10, 20) to deliver a dried gas at the gas output (3) for further use, while a part of said dried gas is fed back through the bidirectional transfer valve (60) into the third and fourth chambers (30, 40) for regenerating their adsorbents. A flow rate to the gas output (3) may be controlled by acting on the first main output valve (21), while a flow rate of dried gas fed back into the third and fourth chambers (30, 40) may be controlled by acting on a bidirectional transfer valve (60). Typically, 10% to 20% of the dried gas output by the second chamber (20) is fed back into the third and fourth chambers (30, 40) for regenerating their adsorbent.

### Second phase of operation (Fig.4):

c) switching ON a blower (70) to blow air taken from an air intake (75), through a first blower valve (71), into an input upstream of the fourth chamber, while step b) is being performed, optionally by further opening a second venting valve (43) connected downstream of the fourth chamber. Since a blower heats up the air it is blowing, this will contribute to regenerating the adsorbents contained in the third and/or fourth chambers (30, 40).

In this example, the blower (70) is blowing air into a second gas conduit (52) that connects an output of the third chamber (30) with an input of the fourth chamber (40).

During this second phase, the first main input valve (11), the first main output valve (21), the first venting valve (42), the first blower valve (71) and the bidirectional transfer valve (60) are all at least partially opened, whereas the other valves (12, 13, 31, 41, 43, 72) are all closed, as shown on Fig. 4.

### Third phase of operation (Fig.5):

d) switching OFF the blower (70) and closing the first blower valve (71), and meanwhile continuing to perform steps a) and b) during a first cooling period of time included into the first period of time. This allows to cool the fourth chamber (40) and/or the third chamber (30).

During this third phase, the first main input valve (11), the first main output valve (21), the first venting valve (42), and the bidirectional transfer valve (60) are all at least partially opened, whereas the other valves (12, 13, 31, 41, 71, 72) are all closed. During this third phase of operation, the second venting valve (43) may remain opened or may be closed.

### Fourth phase of operation (Fig.6):

e) closing the first venting valve (42), closing the first blower valve (71) (or keeping it closed), and closing the second venting valve (43) if it is present (or keeping it closed), during a first pressurizing period of time included into the first period of time and meanwhile continuing to perform step a). This allows to repressurize the third chamber (30) and/or the fourth chamber (40), for example before proceeding to the next step f) as will be detailed hereafter.

During this fourth phase, the first main input valve (11), the first main output valve (21), and the bidirectional transfer valve (60) are all at least partially opened, whereas the other valves (12, 13, 31, 41, 42, 43, 71, 72) are all closed.

In some examples, in step c), the blower (70) is blowing air into the second gas conduit (52), said air having been pre-heated by a first heat exchanger (81) arranged into the second gas conduit.

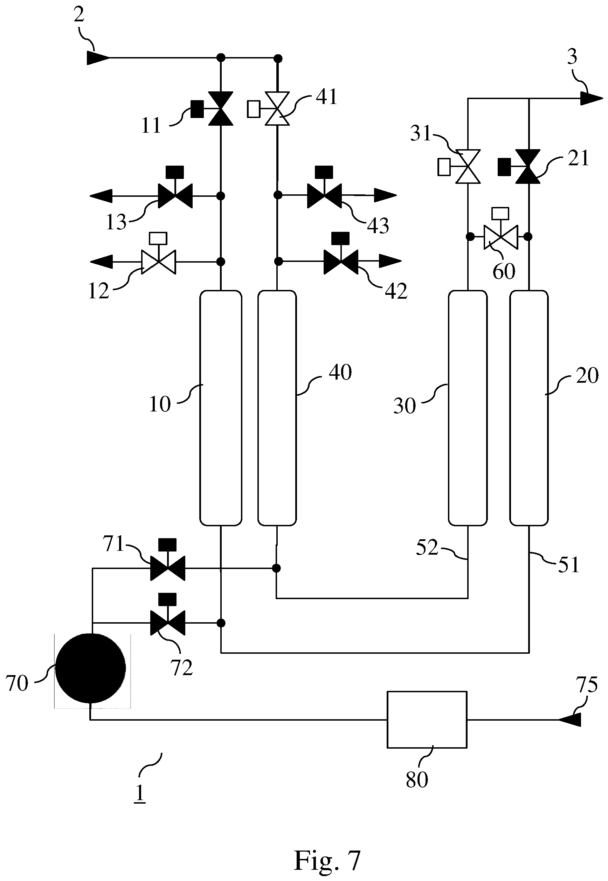

In some examples, the method further comprises the following steps, after having performed step e), as illustrated on Fig.7 to Fig. 10, wherein :
Fig.7 shows the apparatus of Fig.1 during a fifth phase of operation;

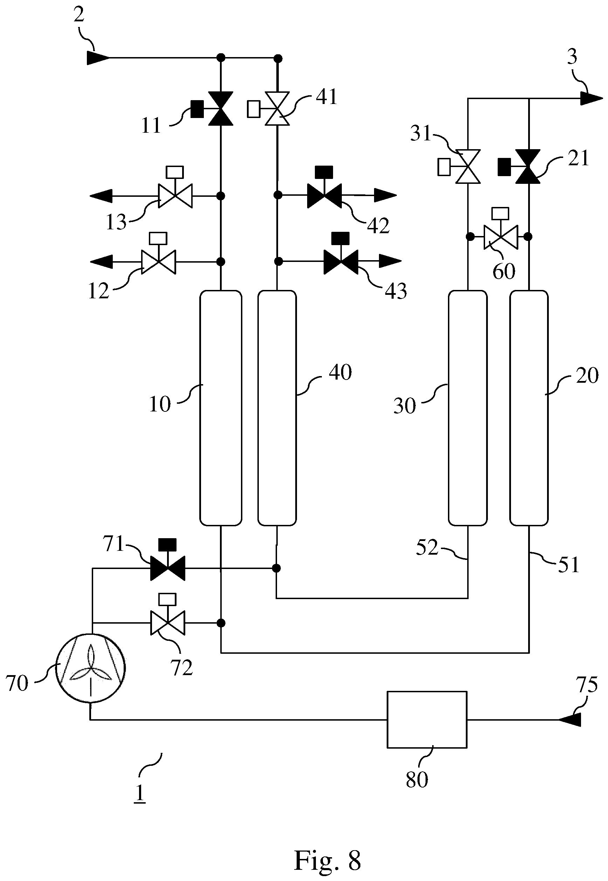

Fig.8 shows the apparatus of Fig.1 during a sixth phase of operation;

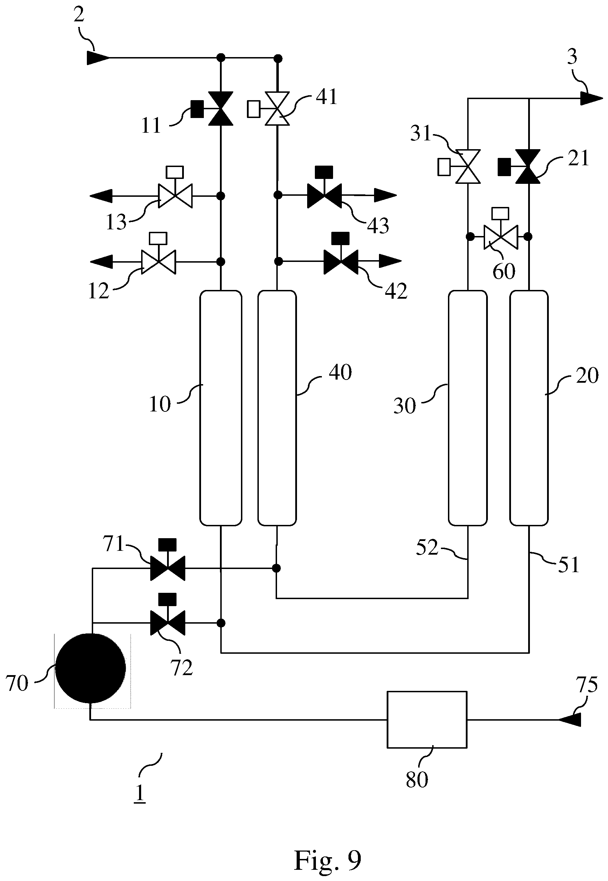

Fig.9 shows the apparatus of Fig.1 during a seventh phase of operation;

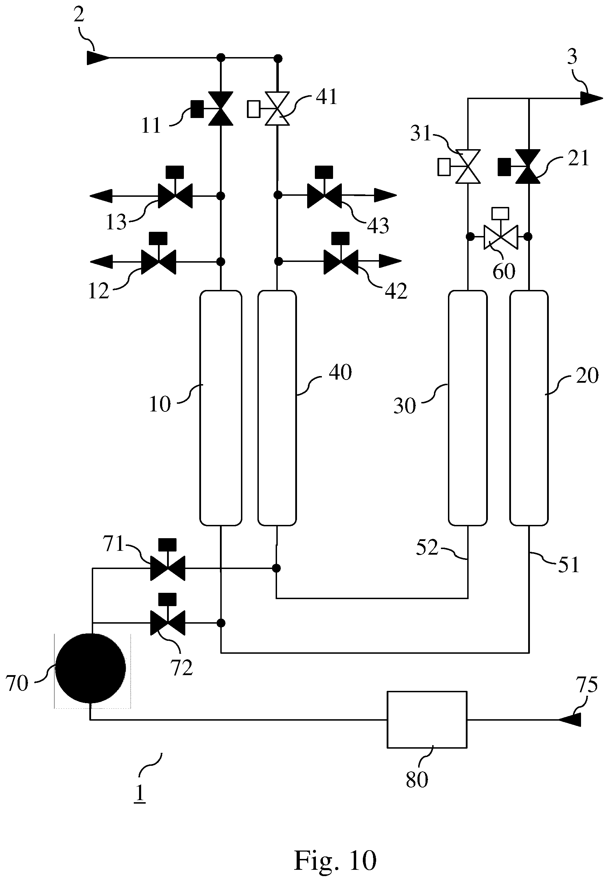

Fig.10 shows the apparatus of Fig.1 during a eighth phase of operation.

In these figures, a valve is closed if it is coloured in black, and a valve is at least partially open if it is coloured in white. In these figures, the blower (70) is switched OFF if it is coloured in black, and it is switched ON if it is coloured in white. The control unit is used and operated to open and close these valves and to switch the blower ON or OFF, as shown on these figures according to the operational phase.

### Fifth phase of operation (Fig.7):

f) drying the gas during a second period of time by feeding it into the fourth chamber (40), the third chamber (30) delivering a dried gas at the gas output (3) for the user;
g) regenerating the first regenerable adsorbent and the second regenerable adsorbent while step f) is being performed, by feeding the second chamber (20) through the bidirectional transfer valve (60) with at least a part of the dried gas output by the third chamber (30) and by venting the first chamber (10) and the second chamber (20) through a third venting valve (12) connected downstream of the first chamber (10).

During this fifth phase, the second main input valve (41), the second main output valve (31), the third venting valve (12) and the bidirectional transfer valve (60) are all at least partially opened, whereas the other valves (11, 13, 21, 42, 43, 71, 72) are all closed.

### Sixth phase of operation (Fig.8):

h) switching ON the blower (70) to blow air from the air intake (75), through a second blower valve (72), into an input upstream of the first chamber (10), while step g) is being performed, optionally by opening a fourth venting valve (13) connected downstream of the first chamber (10). In this example, the blower (70) is blowing air into a first gas conduit (51) that connects an output of the second chamber (20) with an input of the first chamber (10).

During this sixth phase, the second main input valve (41), the second main output valve (31), the third venting valve (12), the second blower valve (72) and the bidirectional transfer valve (60) are all at least partially opened, whereas the other valves (11, 21, 42, 43, 71) are all closed, and whereas the fourth venting valve (13) is optionally opened.

### Seventh phase of operation (Fig.9):

i) switching OFF the blower (70) and closing the second blower valve (72), and meanwhile continuing to perform steps f) and g) during a second cooling period of time included into the second period of time.

During this seventh phase, the second main input valve (41), the second main output valve (31), the third venting valve (12) and the bidirectional transfer valve (60) are all at least partially opened, whereas the other valves (11, 21, 42, 43, 71, 72) are all closed.

During this seventh phase of operation, the fourth venting valve (13) may remain opened or may be closed.

### Eighth phase of operation (Fig.10):

j) closing the third venting valve (12), closing the second blower valve (72) (or keeping it closed), and closing the fourth venting valve (13) if it is present (or keeping it closed), during a second pressurizing period of time included into the second period of time and meanwhile continuing to perform step f).

During this eighth phase, the second main input valve (41), the second main output valve (31), and the bidirectional transfer valve (60) are all at least partially opened, whereas the other valves (11, 12, 13, 21, 42, 43, 71, 72) are all closed.

As becomes apparent, steps f) to j) correspond to steps a) to e), wherein the operation and function of the first and second chambers on the one hand and of the third and fourth chambers on the other hand are reversed.

In some examples, in step h), the blower (70) is blowing air into the first gas conduit (51), said air having been pre-heated by a second heat exchanger (82) arranged into the first gas conduit.

In the exemplary case wherein the second venting valve (43) and the fourth venting valve (13) are absent from the apparatus, and wherein the first venting valve (42) as well as the third venting valve (12) are two-way valves or proportional valves allowing for controllable variable gas flows, the control unit is preferably configured to open more the fourth venting valve (13) during step c) compared to step a), and to open more the third venting valve (12) during step h) compared to step f). This is because the flow of air and/or gas to be vented during steps c) and h) is higher than during steps a) and f) due to the blower being switched ON during steps c) and h).

In some examples, the set of steps a) to j) is repeated a plurality of times, thereby enabling an almost continuous delivery of dried gas to the user at the gas output (3).

In some examples, the air intake (75) is an intake of atmospheric air.

In some examples, the gas to be dried is a gas at a pressure which is greater than 5 bar, or greater than 10 bar, or greater than 20 bar, said pressure being measured at the gas output (3) when the apparatus according to the invention is in operation or when the method according to the invention is being performed. In some examples, a flow rate of the gas to be dried is a flow rate greater than 1 m³/min and up to 100 m³/min.

In some examples, some or all of the valves described herein (11, 12, 13, 21, 31, 41, 42, 43, 60, 71, 72) are controllable valves, such as electromagnetic valves for example, and the control unit is configured to operate these valves and the blower (70) to perform the steps a) to e) or a) to j) as described herein. The control unit may for example be a programmable computer or a programmable logic controller (PLC) whose output(s) act on said valves to open or close them at least partially.

In some examples, the blower is adapted to operate at variable speeds and the control unit is configured to drive the blower at variable speeds.

It will be clear that a method as described herein may for example be implemented with an apparatus as described herein.

The present invention has been described in terms of specific embodiments, which are illustrative of the invention and not to be construed as limiting. Reference numerals in the claims do not limit their protective scope.

Use of the verbs "to comprise", "to include", "to be composed of", or any other variant, as well as their respective conjugations, does not exclude the presence of elements other than those stated.

Use of the article "a", "an" or "the" preceding an element does not exclude the presence of a plurality of such elements.

A method according to the invention may also be described as follows: a method and an apparatus (1) for drying a gas, the method operating by feeding the gas into a series of at least two chambers (10, 20) containing each a regenerable adsorbent for drying said gas and meanwhile to feed a part of the dried gas into a series of at least two other chambers (30, 40) while those other chambers are vented, in order to regenerate the adsorbent contained into these two other chambers. Meanwhile, a blower (70) feeds air from an air intake (75) into at least one of the at least two other chambers (30, 40) in order to improve the regeneration of their adsorbent.

## Claims

1. Method for drying a gas, comprising the following steps:
a) drying the gas during a first period of time by feeding it from a gas input (2) into a first chamber (10) comprising a first regenerable adsorbent and into a second chamber (20) comprising a second regenerable adsorbent, the first chamber and the second chamber being connected in series, the second chamber delivering a dried gas at a gas output (3) for a user;
b) regenerating a third regenerable adsorbent contained in a third chamber (30) and a fourth regenerable adsorbent contained in a fourth chamber (40) while step a) is being performed, the third chamber and the fourth chamber being connected in series, by feeding said third chamber through a bidirectional transfer valve (60) with at least a part of the dried gas output by the second chamber and by venting third chamber and the fourth chamber through a first venting valve (42) connected downstream of the fourth chamber;
c) switching ON a blower (70) to blow air taken from an air intake (75), through a first blower valve (71), into an input upstream of the fourth chamber, while step b) is being performed, optionally by further opening a second venting valve (43) connected downstream of the fourth chamber;
d) switching OFF the blower (70) and closing the first blower valve (71), and meanwhile continuing to perform steps a) and b) during a first cooling period of time included into the first period of time;
e) closing the first venting valve (42), closing the first blower valve (71), and closing the second venting valve (43) if it is present, during a first pressurizing period of time included into the first period of time and meanwhile continuing to perform step a).

2. Method according to claim 1, **characterized in that** in step c) the blower (70) is blowing air into a second gas conduit (52) that connects an output of the third chamber with an input of the fourth chamber.

3. Method according to claim 2, **characterized in that** in step c) the blower (70) is blowing air into the second gas conduit (52), said air having been pre-heated by a first heat exchanger (81) arranged into the second gas conduit.

4. Method according to any of claims 1 to 3, **characterized in that** it further comprises the following steps, after having performed step e):
f) drying the gas during a second period of time by feeding it into the fourth chamber (40), the third chamber (30) delivering a dried gas at the gas output (3) for the user;
g) regenerating the first regenerable adsorbent and the second regenerable adsorbent while step f) is being performed, by feeding the second chamber (20) through the bidirectional transfer valve (60) with at least a part of the dried gas output by the third chamber (30) and by venting the first chamber (10) and the third chamber (30) through a third venting valve (12) connected downstream of the first chamber (10);
h) switching ON the blower (70) to blow air from the air intake (75), through a second blower valve (72), into an input upstream of the first chamber (10), while step g) is being performed, optionally by opening a fourth venting valve (13) connected downstream of the first chamber (10);
i) switching OFF the blower (70) and closing the second blower valve (72), and meanwhile continuing to perform steps f) and g) during a second cooling period of time included into the second period of time;
j) closing the third venting valve (12), closing the second blower valve (72), and closing the fourth venting valve (13) if it is present, during a second pressurizing period of time included into the second period of time and meanwhile continuing to perform step f).

5. Method according to claim 4, **characterized in that** in step h) the blower (70) is blowing air into a first gas conduit (51) that connects an output of the second chamber (20) with an input of the first chamber (10).

6. Method according to claim 5, **characterized in that** in step h) the blower (70) is blowing air into the first gas conduit (51), said air having been pre-heated by a second heat exchanger (82) arranged into the first gas conduit.

7. Method according to any of claims 4 to 6, **characterized in that** the set of steps a) to j) is repeated a plurality of times.

8. Method according to any of claims 1 to 7, **characterized in that** the air intake (75) is an intake of atmospheric air.

9. Method according to any of claims 1 to 8, **characterized in that** the gas to be dried is a gas at a pressure which is greater than 5 bar, or greater than 10 bar, or greater than 20 bar, said pressure being measured at the gas output (3).

10. Apparatus for drying a gas, said apparatus comprising:
- a first circuit comprising, fluidly connected in series, a gas input (2) to input the gas to be dried, a first main input valve (11), a first chamber (10) containing a first regenerable adsorbent, a first gas conduit (51), a second chamber (20) containing a second regenerable adsorbent, a first main output valve (21), and a gas output (3) to deliver the dried gas to a user;
- a second circuit comprising, fluidly connected in series, the gas input (2) to input the gas to be dried, a second main input valve (41), a fourth chamber (40) containing a fourth regenerable adsorbent, a second gas conduit (52), a third chamber (30) containing a third regenerable adsorbent, a second main output valve (31), and the gas output (3) to deliver the dried gas to the user;
- a bidirectional transfer valve (60) connected on its one side between the second main output valve (31) and the third chamber (30), and on its opposite side between the first main output valve (21) and the second chamber (20);
- a first venting valve (42) connected on its one side between the second main input valve (41) and the fourth chamber (40);
- a third venting valve (12) connected on its one side between the first main input valve (11) and the first chamber (10);
- a third circuit comprising an air intake (75) and a blower (70) that are fluidly connected in series, a first blower valve (71) connected between an output of the blower (70) and the second gas conduit (52), a second blower valve (72) connected between the output of the blower (70) and the first gas conduit (51);
- a control unit configured to operate the first main input valve (11), the second main input valve (41), the first main output valve (21), the second main output valve (31), the first venting valve (42), the third venting valve (12), the first blower valve (71), the second blower valve (72), and the blower (70).

11. Apparatus according to claim 10, **characterized in that** the first main input valve (11), the second main input valve (41), the first main output valve (21), the second main output valve (31), the first venting valve (42), the third venting valve (12), the first blower valve (71), and the second blower valve (72) are one-way valves.

12. Apparatus according to claim 10 or 11, **characterized in that** it further comprises a second venting valve (43) connected on its one side between the second main input valve (41) and the fourth chamber (40), and a fourth venting valve (13) connected on its one side between the first main input valve (11) and the first chamber (10), and **in that** the control unit is configured to also operate the second venting valve (43) and the fourth venting valve (13).

13. Apparatus according to any of claims 10 to 12, **characterized in that** the blower (70) is a side-channel blower.

14. Apparatus according to any of claims 10 to 13, **characterized in that** the third circuit comprises an air filter (80).

15. Apparatus according to any of claims 10 to 14, **characterized in that** it further comprises a first heat exchanger (81) having a first tubing (81A) arranged in series into the first gas conduit (51), said first tubing being disposed into an airflow from the blower (70) when the blower is in operation, and a second heat exchanger (82) having a second tubing (82A) arranged in series into the second gas conduit (52), said second tubing being disposed into an airflow from the blower (70) when the blower is in operation.
